# EUROPEAN PATENT APPLICATION

(11) **EP 2 385 621 A2**
(43) Date of publication of application: **09.11.2011**
(21) Application number: 11158831.5
(22) Date of filing: 18.03.2011
(51) Int. Cl.: H02P 9/30

(54) **Improvements in or relating to gas turbine engines**

(30) Priority: 15.04.2010 GB 1006268
(71) Applicant: Rolls-Royce plc, London SW1E 6AT (GB)
(72) Inventor: Catucci, Maurizio, Nottingham, Nottinghamshire NG9 2HY (GB); Trainer, David, Derby, Derbyshire DE24 0AQ (GB); Palethorpe, Benjamin, Nottingham, Nottinghamshire NG7 5JH (GB)
(74) Representative: Little, Thomas Andrew

(57) **Abstract**

The generator 40 uses a permanent magnet electrical machine 42 providing three phase, unregulated DC voltage at 56, from three windings 44 feeding a rectifier circuit 54. A capacitor 62 across the DC voltage 56 acts as a buffer between the DC supply and the load 66. Regulation of the DC supply seen by the load 66 is achieved by a switch 58 in parallel with the DC voltage 56 and with the load 66. The switch 58 allows current to be drawn by the capacitor 62 or load 66 from the windings 44, or shorts the windings 44. The inductance of the windings 44 makes it safe to short them. A blocking diode 64 prevents current returning from the capacitor 62 when the switch 58 is closed. The result is a regulated DC output of adequate quality for e.g. aerospace applications and with low component count and complexity.

## Description

The present invention concerns improvements in or relating to gas turbine engines. In particular, examples of electrical power generation in gas turbine engines will be described.

Electrical power is generated within gas turbine engines for a variety of reasons. For example, control systems within the engine may be electrically powered. In aerospace applications, electrical power may be taken from the gas turbine engine for supplying systems on the airframe.

Examples of the present invention provide a gas turbine engine comprising:
an electrical generator having inductive windings;
the generator being driven, in use, by a moving component of the engine, to generate electrical power from the windings;
and the engine further comprising:
   a switch arrangement in parallel with the output of the windings and operable to control the output voltage from the generator by selectively shorting the inductance of the windings.

In another aspect, examples of the present invention provide an electrical generator for a gas turbine engine, the generator having inductive windings and being driven, in use, by a moving component of the engine, to generate electrical power from the windings, and the generator further comprising a switch arrangement in parallel with the output of the windings and operable to control the output voltage from the generator by selectively shorting the inductance of the windings.

Features of examples of these aspects of the invention are set out in the subsidiary claims attached, to which reference should now be made.

Examples of the present invention will now be described in more detail, by way of example only, and with reference to the accompanying drawings, in which:
Fig. 1 is an axial section of a gas turbine engine with which the present invention may be implemented;
Fig. 2 is a schematic diagram of a generator arrangement for the engine of Fig. 1; and
Fig. 3 is a diagram of a rectifier circuit for the generator of Fig. 2.

### Overview

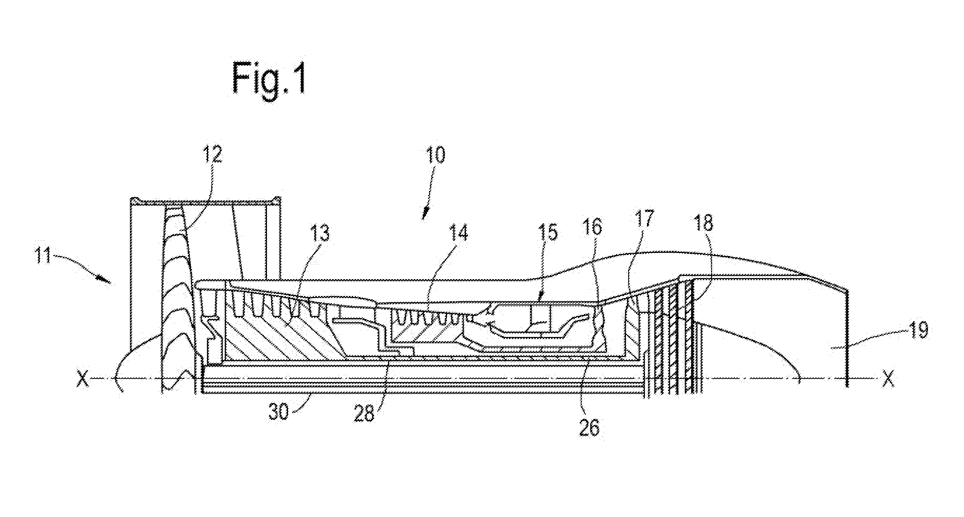

Referring to Fig. 1, a gas turbine engine is generally indicated at 10 and comprises, in axial flow series, an air intake 11, a propulsive fan 12, an intermediate pressure compressor 13, a high pressure compressor 14, a combustor 15, a turbine arrangement comprising a high pressure turbine 16, an intermediate pressure turbine 17 and a low pressure turbine 18, and an exhaust nozzle 19.

The gas turbine engine 10 operates in a conventional manner so that air entering the intake 11 is accelerated by the fan 12 which produces two air flows: a first air flow into the intermediate pressure compressor 13 and a second air flow which provides propulsive thrust. The intermediate pressure compressor compresses the air flow directed into it before delivering that air to the high pressure compressor 14 where further compression takes place.

The compressed air exhausted from the high pressure compressor 14 is directed into the combustor 15 where it is mixed with fuel and the mixture combusted. The resultant hot combustion products then expand through, and thereby drive, the high, intermediate and low pressure turbines 16, 17 and 18 before being exhausted through the nozzle 19 to provide additional propulsive thrust. The high, intermediate and low pressure turbines 16, 17 and 18 respectively drive the high and intermediate pressure compressors 14 and 13 and the fan 12 by suitable interconnecting shafts 26, 28, 30.

In the examples to be described, moving components of the engine, such as the shafts 26, 28, 30, are used to drive an electrical generator (not shown in Fig. 1).

### Electrical generator

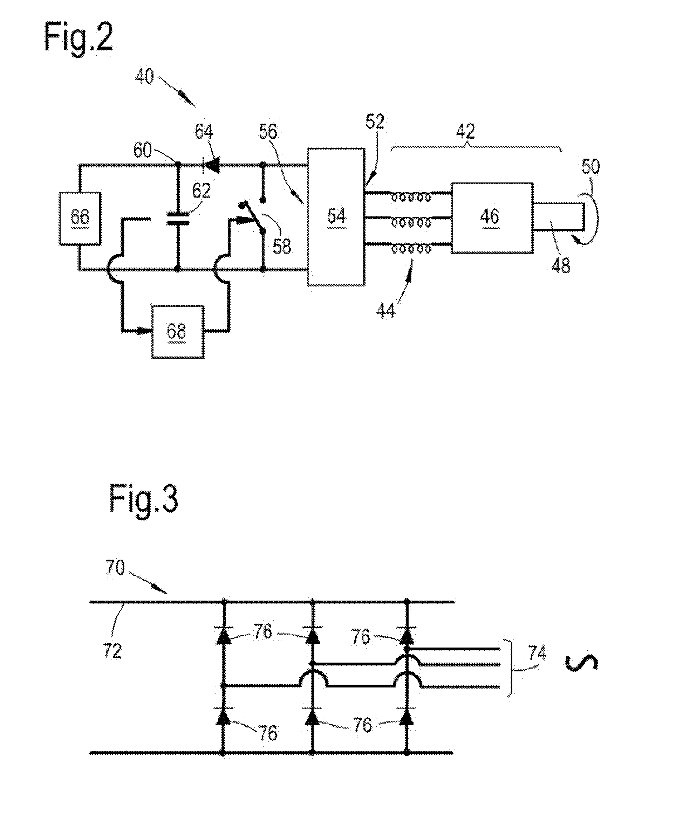

Fig. 2 illustrates an example of an electrical generator 40 within the engine 10.

The generator 40, illustrated in Fig. 2, includes a permanent magnet electrical machine 42. Other possibilities will be further described below. The machine 42 includes inductive windings 44. Other components of the permanent magnet machine 42 are not shown in detail and are illustrated schematically by the block 46. These other components will include permanent magnets able to rotate relative to the windings 44 in order to generate electrical power from the windings 44.

Relative movement between the permanent magnets and the windings 44 is created by drive taken, in use, from a moving component 48 of the engine 10. In this example, the moving component 48 is illustrated schematically as a shaft, with the arrow 50 indicating rotation of the shaft 48. The shaft 48 may be one of the shafts 26, 28, 30, so that the generator 40 is driven directly from the principal engine shafts. Alternatively, the generator 40 may be driven indirectly through a gearbox, gear train or other alternative arrangement. In this example, the shaft 48 drives a rotor which carries the permanent magnets of the machine 42; the windings 44 form part of the stator of the machine 42.

Thus, during use, when the moving component 48 is turning, relative movement arises between the rotor magnet and the windings 44, and this creates in known manner an output voltage from the windings 44, at 52. This output voltage will be AC. The voltage level and frequency will depend on the speed of the component 48. Three windings 44 are illustrated, to indicate that the machine 42 is a three-phase machine.

In this example, the output voltage 52 is applied to a rectifier circuit 54, details of which are set out below. The rectifier 54 converts the three-phase AC output 52 to a DC voltage at 56. The DC voltage 56 is unregulated because, as noted above, the voltage level at 52 depends on the speed of the component 48.

Regulation of the DC voltage is achieved by means of a switch 58. The switch 58 is connected across the unregulated DC voltage 56 and is therefore in parallel with the output of the windings 44. Accordingly, closing the switch 58 has the effect of shorting the inductance of the windings 44. Selectively closing the switch 58, thereby selectively shorting the inductance of the windings 44, allows the final output voltage at 60 to be controlled. Before describing this operation in more detail, it is appropriate to describe the remaining components illustrated in Fig. 2, as follows.

The generator 40 further comprises a capacitor 62. The capacitor 62 is connected across the DC voltage 56 and is therefore in parallel with the switch 58. A diode 64 is provided between the capacitor 62 and the switch 58. Thus, the diode 64 is in series with the capacitor 62, and the capacitor 62 and diode 64 are together in parallel with the switch 58. The polarity of the diode 64 is chosen so that the diode 64 isolates the capacitor 62 from supplying current to the switch 58, when the switch is closed. That is, the diode 64 acts as a blocking diode between the capacitor 62, when charged, and the switch 58, when closed.

The terminals of the capacitor 62 represent the final D.C. voltage output of the generator 40, to which a DC load 66 is connected, in use.

The state of the switch 58 is controlled by a control circuit 68, which, in turn, monitors the DC voltage across the capacitor 62. The switch 58 and the control circuit 68 can be implemented by any of a wide range of power electronic techniques, circuits and components, all of which will be well understood by the skilled reader and therefore do not need to be described more fully. It is sufficient for the skilled reader to understand the functions to be achieved, as follows.

During use, unregulated DC arises at 56, as noted above. This voltage will tend to charge the capacitor 62, thereby raising the final output voltage 60. Conversely, current drawn by the load 66 from the capacitor 62 will tend to discharge the capacitor 62, thereby reducing the final output voltage 60. Regulation of the final output voltage 60 can be achieved by selective operation of the switch 58. When the control circuit 68 senses that the output voltage 60 is reducing (because the load 66 is discharging the capacitor 62), the switch 58 is opened to apply the DC voltage 56 across the capacitor 62 to boost the charge of the capacitor 62 and therefore raise the final DC voltage 60. Conversely, if the control circuit 68 senses that the final output voltage 60 is rising (because the load 66 is not drawing sufficient current to cause the capacitor 62 to discharge, so that the DC voltage 56 will cause the capacitor 62 to charge), the switch 58 is opened to stop the capacitor 62 charging further from the DC voltage 56.

The capacitor 62 therefore acts as a buffer between the unregulated DC at 56, and the load 66.

It is important to note that closing the switch 58 to short the windings 44 is expected to be safe because the windings 44 are inductive, thus limiting the resultant current through the switch 58, and because the diode 64 blocks current returning from the capacitor 62.

Thus, by monitoring the output voltage 60 and controlling the state of the switch 58, the control circuit 68 can regulate the DC level of the output voltage 60 to remain at the required voltage, over a wide range of operating conditions, by making use of the inductance of the windings 44. In particular, this can be achieved over a wide range of load demands and speeds of the component 48. It is not expected that an arrangement of this simplicity would achieve perfect regulation over all possible operating conditions. In particular, low resistance loads, drawing large currents, are likely to discharge the capacitor 62 more quickly than the DC voltage 56 can charge it, thus resulting in the output voltage 60 beginning to fall. Nevertheless, it is envisaged that in the aerospace environment of a gas turbine engine, the arrangement described can provide a useful source of electrical power.

### Rectifier

One example circuit 70 for use as the rectifier 54 is illustrated in Figure 3 and is a conventional six diode bridge rectifier, well-known in itself, for providing rectified DC at 72, from three AC phases 74, by means of six diodes 76. Each phase 74 is coupled to the positive pole of the DC 72, through a forward-biased diode, and to the negative pole of the DC 72, through a reverse-biased diode.

Other rectifier circuits could be used. However, the simplicity of the circuit 70 is considered desirable in an aerospace environment. In particular, the circuit 70 is entirely passive, which is expected to provide advantages of reliability.

### Location

The components of the generator 40, illustrated in Fig. 2, may all be housed within the engine 10. However, other layouts could be envisaged. For example, the unregulated DC voltage 56 could be provided elsewhere, outside the engine 10, such as to a convenient location on an airframe, allowing the voltage regulation to take place within a more benign environment.

Many variations, modifications and alternatives can be envisaged in relation to the arrangements described above. The example described above uses a permanent magnet machine. Alternatively, other forms of machine could be used, such as a brushless D.C. machine, in place of the permanent magnet machine 42. Other forms of rectifier circuit could be used, as noted above.

The arrangements described above are expected to exhibit a number of advantages arising from the typical aerospace environment in which a gas turbine engine may be used. First, the rectifier and regulation circuits are achieved simply, with a small number of components, many of which are entirely passive. This is expected to yield advantages of reliability, cost saving and weight saving. The use of a permanent magnet machine, in particular, is expected to provide further advantages arising from the high energy density possible from this technology, resulting in weight advantages. Providing voltage regulation, in the manner described, by making use of the windings of the machine 42 allows the performance to be achieved with minimal additional component count, weight or complexity.

## Claims

1. A gas turbine engine (10) comprising:
an electrical generator (40, 42) having inductive windings (44);
the generator (40, 42) being driven, in use, by a moving component (48) of the engine (10), to generate electrical power from the windings (44);
and the engine (10) further **characterised by** a switch arrangement (58) in parallel with the output of the windings (44) and operable to control the output voltage from the generator (40, 42) by selectively shorting the inductance of the windings (44).

2. An engine according to claim 1, further comprising a capacitor (62) in parallel with the switch (58).

3. An engine according to claim 2, further comprising a diode (64), the capacitor (62) and diode (64) being in series with each other and together in parallel with the switch (58), the diode (64) being oriented to isolate the capacitor (62) from supplying current to the switch (58), when the switch (58) is closed.

4. An engine according to claim 2 or 3, wherein the generator (40,42) is an AC generator, the engine (10) further comprising a rectifier circuit (54) between the generator output (52) and the switch (58).

5. An engine according to claim 4, wherein the rectifier circuit (54) is passive.

6. An engine according to claim 4 or 5, wherein the rectifier circuit (54) is a diode bridge (76).

7. An engine according to any preceding claim, wherein the generator (40, 42) is a three-phase generator.

8. An engine according to any preceding claim, wherein the generator (40, 42) is a permanent magnet machine.

9. An engine according to any of claims 1 to 7, wherein the generator (40, 42) is a brushless DC machine.

10. An engine according to claim 1, wherein a rectifier circuit (54) is arranged between the generator output (52) and the switch (58), the rectifier circuit (54) comprises a diode bridge (76) and the generator (40, 42) is a permanent magnet machine.

11. An engine according to any preceding claim, wherein the generator (40, 42) is driven, in use, from a shaft (26, 28, 30) of the engine (10).

12. An electrical generator (40,42) for a gas turbine engine (10), the generator (40, 42) having inductive windings (44) and being driven, in use, by a moving component (48) of the engine (10), to generate electrical power from the windings (44), and the generator (40, 42) further **characterised by** a switch arrangement (58) in parallel with the output of the windings (44) and operable to control the output voltage from the generator (40, 42) by selectively shorting the inductance of the windings (44).
